# EUROPÄISCHE PATENTANMELDUNG

(11) **EP 1 905 706 A1**
(43) Veröffentlichungstag der Anmeldung: **02.04.2008**
(21) Anmeldenummer: 07113691.5
(22) Anmeldetag: 02.08.2007
(51) Int. Cl.: B65G 17/06, B65G 23/20

(54) **Antrieb für einen Förderer, insbesondere Gepäckförderer in Flughafenanlagen**

(30) Priorität: 29.09.2006 DE 102006046751
(71) Anmelder: SIEMENS AKTIENGESELLSCHAFT, 80333 München (DE)
(72) Erfinder: Helgert, Thomas, 92648 Vohenstrauss (DE)

(57) **Zusammenfassung**

Die Erfindung betrifft den Antrieb für einen Förderer, insbesondere Gepäckförderer mit sich überlappenden plattenförmigen Trägern (5), die an einer endlos umlaufenden gelenkigen Zugkette (2) befestigt sind. Um den Antrieb einfach, funktionell und wirkungsvoll zu gestalten, wird ein Antriebsmechanismus vorgeschlagen, der aus mindestens einer parallel zur Transportrichtung ausgerichteten schraubenförmig verzahnten drehangetriebenen Schnecke (6) besteht, die in der Art eines Schneckengetriebes beim Drehantrieb um ihre Längsachse (8) mit an der Zugkette (2) vorgesehenen und in die Verzahnung (7) der Schnecke (5) formschlüssig eingreifenden Mitnehmer (11) korrespondiert.

## Beschreibung

Die Erfindung betrifft einen Antrieb für einen Förderer, insbesondere Gepäckförderer in Flughafenanlagen, bei dem eine Vielzahl sich überlappender plattenförmiger Träger zum Transport von darauf auflegbaren Stückgutteilen auf einer endlosen Bewegungsbahn geführt werden und die Träger an einer in der Bewegungsbahn ebenfalls endlos umlaufenden gelenkigen Zugkette befestigt sind, wobei die Zugkette Auslenkungen um Gelenkbolzen in mindestens einer Ebene ermöglicht und über einen ortfesten Antriebsmechanismus antreibbar ist, der auf einen geraden, aus mehreren Kettengliedern bestehenden Abschnitt der Zugkette einwirkend, diese in Transportrichtung fortbewegt.

Förderer der eingangs beschriebenen Art werden zumeist im öffentlichen wie auch im nicht öffentlichen Bereich von Flughafenanlagen eingesetzt und dort z.B. zum Transport von Gepäckstücken verwendet. Bekannt sind derartige Gepäckförderer vor allem als so genannte Race Tracks beim Baggage reclaim, d.h. bei der Gepäckausgabe, wo der Passagier nach der Landung sein separat transportiertes Gepäck in Empfang nehmen kann. Die so genannten Race Tracks sind als Rundlauf ausgebildet, d.h. als endlos umlaufende Förderer und bestehen wegen der erforderlichen Kurvengängigkeit aus plattenartigen Trägern, zumeist aus Metall, Kunststoff oder Gummi, die auf der endlosen Bewegungsbahn des Rundlaufes geführt werden. Die Platten sind an einer endlos umlaufenden Zugkette befestigt, die ihrerseits, mindestens in der Horizontalebene, auslenkbar ist, damit die Zugkette und die plattenartigen, sich gegeneinander verschiebenden Träger dem Kurvenverlauf des Rundlaufes folgen können. Die einzelnen Kettenglieder sind über vertikal orientierte Bolzen miteinander gelenkig verbunden, gegebenenfalls ist auch eine Gelenkigkeit in der horizontalen Ebene vorgesehen, wenn z.B. Steigungsstrecken bewältigt werden sollen.

Über die Zugkette wird der Förderer mit den plattenartigen Trägern endlos angetrieben. Zu diesem Zweck ist es bekannt, eine Reibmitnahme der Zugkette über einen ortsfesten Antriebsmechanismus zu bewerkstelligen, etwa in der Art, wie in der europäischen Patentschrift EP 0 869 086 B1 in der Zeichnungsfigur 7 dargestellt. Dort wird gezeigt, wie mittels beidseitig an einen Abschnitt der Zugkette anlegbarer Treibriemen, die ihrerseits endlos umlaufend angetrieben sind, über Reibschluss das Antriebsmoment der Treibriemen auf die Zugkette übertragen wird, so dass diese in Transportrichtung des Förderers vorwärts bewegt werden kann. Die Treibriemen werden beidseitig der Zugkette angeordnet, so dass diese mit den zu treibenden Abschnitten zwischen den an den Kettengliedern anliegenden Abschnitten der Riemen eingespannt wird, wobei die Einspannkraft durch vorgesehene federbelastete Anpressrollen erhöht wird. Diese Anpressrollen liegen an der rückwärtigen Seite des Treibriemens an und pressen dessen rutschhemmend ausgebildete Vorderseite gegen die Zugkettenabschnitte.

Die als Gummi-Flachriemen ausgebildeten Treibriemen haben den Nachteil, dass in Folge des Anfahrens und Abstoppen des Förderers erhebliche Walkarbeit geleistet werden muss, die durch die engen Umlenkradien des Treibriemens verstärkt wird. Die Folge davon ist ein sehr hoher Verschleiß, zumal ein Durchrutschen des Treibriemens generell nicht immer vermieden werden kann. Um eine Reibmitnahme der Zugkette überhaupt darstellen zu können, muss die Flächenpressung des Riemens auf die Kettenglieder entsprechend groß sein, damit das Trägheitsmoment bei voller Beladung des Rundlaufes durch den Reibschluss überwunden werden kann. Das setzt wiederum aufwendige Konstruktionen voraus, wie beispielsweise die vorstehend geschilderten federbelasteten Andruckrollen zum Anpressen des Treibriemens an die Zugkette.

Um diese erkannten Nachteile zu vermeiden und einen Antrieb für einen gattungsgemäßen Förderer einfach und funktionssicher zu gestalten, wird erfindungsgemäß vorgeschlagen, dass der Antriebsmechanismus aus mindestens einer parallel zur Transportrichtung ausgerichteten schraubenförmigen Antriebsschnecke besteht, die in der Art eines Schneckengetriebes bei ihrem Drehantrieb um ihre Längsachse mit an der Zugkette vorgesehenen und in die Verzahnung der Schnecke formschlüssig eingreifenden Mitnehmern korrespondiert.

In Abkehr von der bisher üblichen Reibmitnahme der Zugkette wird erfindungsgemäß eine Art Schneckengetriebe vorgeschlagen, durch das eine formschlüssige Mitnahme der Zugkette durch die Antriebseinheit erfolgen kann. Damit können die aufwändigen Anpressmaßnahmen der bekannten Treibriemen entfallen, ein Einspannen der Zugkette zwischen den Antriebseinheiten, wie bei den Gummi-Flachriemen bekannt, ist nicht mehr erforderlich. Damit wird die Antriebseinheit sehr vereinfacht und dadurch preisgünstiger und unterliegt nicht mehr dem hohen Verschleiß, der eine ständige Wartung mit damit einhergehenden Stillständen der Anlage erforderlich macht.

In einer bevorzugten Ausführung der Erfindung wird vorgeschlagen, dass die Mitnehmer an den Gelenkbolzen der Zugkette vorgesehen sind. Durch entsprechende Ausbildung dieser Gelenkbolzen, die zur Auslenkung der Zugkette in Kurvenbereichen ohnehin erforderlich sind, wird ein Eingriff dieses Teiles der Zugkette in das Schneckengetriebe, also hinter die umlaufende Verzahnung der Schnecke ermöglicht.

Besonders günstig ist es, wenn nach einem weiteren Merkmal der Erfindung vorgesehen ist, die Mitnehmer als Rollen auszubilden, die jeweils an den aus der Zugkette hervorstehenden freien Enden der Gelenkbolzen gelagert sind. Die Gelenkbolzen selbst sind zu diesem Zweck zugleich als "fliegende" Achsen für die Rollen der Mitnehmer ausgestaltet, wobei jeder Gelenkbolzen der Zugkette länger ist, als für seine Gelenkfunktion erforderlich und auf dem aus der Zugkette herausragenden Teil des Gelenkbolzens die Rolle verlagert ist. Diese Rollen aller derart gestalteten Gelenkbolzen wiederum greifen beim Umlauf nacheinander hinter den schneckenförmig umlaufenden Zahn der drehangetriebenen Schnecke und rollen an dessen Flanke ab, sobald sich die Schnecke um ihre Längsachse dreht. Da die Zugkette in Längsrichtung geführt ist, bewirkt diese Art des Eingriffs der Rolle in die Schnecke den Vortrieb des Förderers in seiner Transportrichtung; der Verschleiß der Mitnehmer wird dadurch vermieden, dass die Rollen an dem Gelenkbolzen drehgelagert sind.

Besonders vorteilhaft ist es, wenn nach einem weiteren Merkmal der Erfindung vorgesehen ist, dass die schraubenförmig verzahnte Schnecke unterhalb der Zugkette innerhalb eines geraden Abschnittes der Bewegungsbahn gelagert ist. Das hat den Vorteil, dass nur noch ein Antrieb, und nicht mehr, wie beim Stand der Technik, zwei gegenüberliegende, die Zugkette einspannende Antriebe, vorgesehen sein müssen und dieser Antrieb sehr einfach und geschützt am Rahmen des Förderers verlagert sein kann.

Wenn nach einem anderen Merkmal der Erfindung vorgesehen ist, dass mehr als eine schraubenförmig verzahnte Schnecke in die Zugkette eingreift, dient dies dem Aufbringen eines erhöhten Antriebsmomentes für die Zugkette, wobei die Schnecken an unterschiedlichen Orten des Rundlaufes verteilt angeordnet sein können.

Die Schnecken können erfindungsgemäß von einem gemeinsamen Antrieb synchron antreibbar sein oder aber nach einem anderen Merkmal der Erfindung mit jeweils einem eigenen Antrieb versehen sein. Im letzteren Fall müssen die beiden Antriebe, solange die Schnecken mit dem Mitnehmer im Eingriff sind, ebenfalls synchronisiert sein.

Ein besonderer Vorteil der erfindungsgemäßen Lösung ergibt sich, wenn bei Verwendung mehrerer Schnecken zum Antrieb einer Zugkette mindestens eine der Schnecken von ihrem Antrieb entkoppelbar ist. Werden zum Beispiel zwei angetriebene Schnecken verwendet, so kann im Falle des Ausfalls eines Antriebes eine Schnecke von ihrem Antrieb entkoppelt werden, damit ein Weiterbetrieb der Anlage mit dem verbleibenden Antrieb über die verbleibende Schnecke möglich wird.

Dies kann in einfachster Weise durch einen Freilauf an einer der Schnecken verwirklicht werden.

Als Antrieb der Schnecke bzw. der Schnecken ist nach einem Vorschlag der Erfindung ein Getriebemotor mit zugeordnetem Frequenzumrichter vorgesehen. Der Frequenzumrichter gestattet den Einsatz von preiswerten Normmotoren in einem weiten Drehzahlbereich; dadurch wird ein sehr preiswerter und funktionssicherer Antrieb für einen gattungsgemäßen Förderer geschaffen, der die beschriebenen Nachteile der gattungsgemäßen Treibriemenantriebe nicht aufweist.

Statt des vorgeschlagenen Getriebemotors können auch bekannte Rollenmotoren eingesetzt werden, die unmittelbar in der Schnecke angeordnet sind.

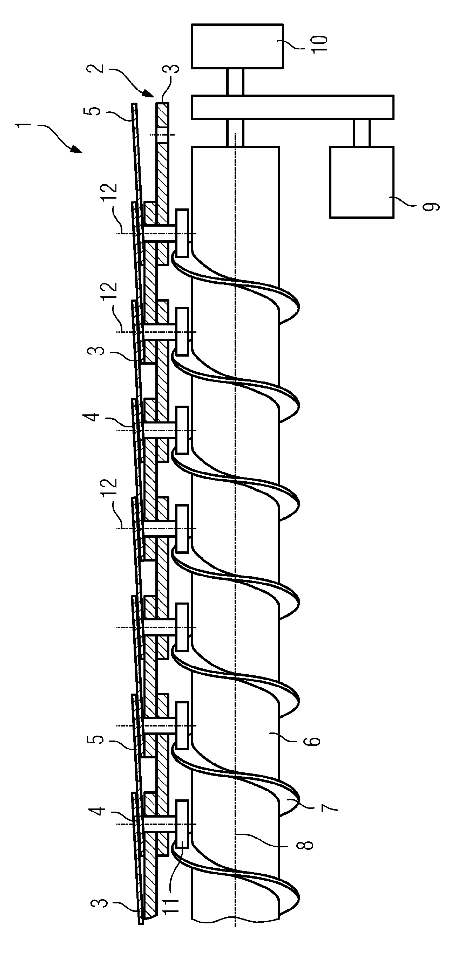

Ein Ausführungsbeispiel der Erfindung wird in der Zeichnung dargestellt und nachfolgend beschrieben.

Die einzige Zeichnungsfigur ist grob schematisch und dient nur dem Verständnis der Funktionsweise. Die Zeichnungsfigur stellt eine Seitenansicht des erfindungsgemäßen Förderers dar.

Mit 1 ist insgesamt der Antrieb eines Gepäckförderers bezeichnet. Die insgesamt mit 2 bezifferte Zugkette besteht aus den einzelnen Kettengliedern 3, die über Gelenkbolzen 4 miteinander verbunden sind. Die Gelenkbolzen 4 gestatten ein Auslenken der Zugkette in der horizontalen Ebene, also senkrecht zur Zeichnungsebene. An der Zugkette 2 sind wie bei 5 schematisch dargestellt, die plattenförmigen Träger befestigt, die einander überlappend, eine schuppenförmige Tragfläche für aufliegendes (nicht dargestelltes) Fluggepäck bieten.

Die vertikal orientierten Gelenkbolzen 4 sind nach unten verlängert und dienen als Lagerung für Mitnehmer, die als Rollen 11 ausgebildet sind und um die Längsachsen 12 der Gelenkbolzen 4 koaxial drehgelagert sind. Unterhalb der Zugkette 2 ist die erfindungsgemäße schraubenförmig verzahnte Schnecke 6 angeordnet, deren Längsachse 8 parallel zur Bewegungsrichtung der Zugkette 2 verläuft. Die Schnecke ist als zylindrischer Grundkörper gestaltet, um den herum sich schraubenförmig die Verzahnung 7 windet, die ein oder auch mehrgängig ausgebildet sein kann. Zwischen die einzelnen Wendel der Verzahnung ragen die Rollen 11 der Mitnehmer, so dass diese beim Drehen der Schnecke 6 um die Längsachse 8 von den Flanken der Verzahnung 7 mitgenommen werden, wobei die Rollen 11 an den Flanken 7 abrollen. Da die Zugkette in der Längsbewegungsrichtung des Förderers geführt ist, bewirkt die von der Verzahnung 7 auf die Rollen 11 übertragende Kraftkomponente in Transportrichtung des Förderers eine Bewegung der Zugkette 2 in gleicher Richtung. Somit wird ein sehr einfacher wirkungsvoller formschlüssiger Antrieb für eine derartige Zugkette geschaffen, die lediglich dadurch modifiziert sein muss, dass die verlängerten Gelenkbolzen entsprechend als Mitnehmer in die Schnecke eingreifen müssen. Selbstverständlich können die Mitnehmer auch in anderer Form gestaltet sein und beispielsweise direkt an den Kettengliedern ausgebildet oder daran befestigt sein.

Der Antrieb der Schnecke kann beispielsweise durch den Getriebemotor 9 mit dem Frequenzrichter 10 erfolgen, es ist aber auch möglich, einen (nicht dargestellten) Rollenmotor in das Innere der Schnecke koaxial zu deren Längsachse einzubauen und die Schnecke damit anzutreiben. Die Verlagerung der Schnecke und deren Antrieb sind ansonsten konventionell und braucht daher nicht im Einzelnen beschrieben werden.

## Patentansprüche

1. Antrieb für einen Förderer, insbesondere Gepäckförderer in Flughafenanlagen, bei dem eine Vielzahl sich überlappender plattenförmiger Träger zum Transport von darauf auflegbaren Stückgutteilen auf einer endlosen Bewegungsbahn geführt werden und die Träger an einer in der Bewegungsbahn ebenfalls endlos umlaufenden gelenkigen Zugkette befestigt sind, wobei die Zugkette Auslenkungen um Gelenkbolzen in mindestens einer Ebene ermöglicht und über einen ortsfesten Antriebsmechanismus antreibbar ist, der auf einen geraden, aus mehreren Kettengliedern bestehenden Abschnitt der Zugkette einwirkend, diese in Transportrichtung fortbewegt,
**dadurch gekennzeichnet, dass**
der Antriebsmechanismus aus mindestens einer parallel zur Transportrichtung ausgerichteten schraubenförmig verzahnten drehangetriebenen Schnecke (6) besteht, die in der Art eines Schneckengetriebes bei ihrem Drehantrieb um ihre Längsachse (8) mit an der Zugkette (2) vorgesehenen und in die Verzahnung (7) der Schecke (6) formschlüssig eingreifenden Mitnehmern (Rolle 11) korrespondiert.

2. Antrieb für einen Förderer nach Anspruch 1,
**dadurch gekennzeichnet, dass**
die Mitnehmer(Rolle 11) an den Gelenkbolzen (4) der Zugkette (2) vorgesehen sind.

3. Antrieb für einen Förderer nach Anspruch 2,
**dadurch gekennzeichnet, dass**
die Mitnehmen als Rollen (11) ausgebildet sind, die jeweils an den aus der Zugkette (2) hervorstehenden freien Enden der Gelenkbolzen (4) gelagert sind.

4. Antrieb für einen Förderer nach Anspruch1 bis 3,
**dadurch gekennzeichnet, dass**
die schraubenförmig verzahnte Schnecke (6) unterhalb der Zugkette (2) innerhalb einer geraden Abschnittes der Bewegungsbahn gelagert ist.

5. Antrieb für einen Förderer nach Anspruch 1 bis 4,
**dadurch gekennzeichnet, dass**
mehr als eine schraubenförmig verzahnte Schnecke (6) in die Zugkette (2) eingreifen.

6. Antrieb für einen Förderer nach Anspruch 5,
**dadurch gekennzeichnet, dass**
die Schnecken (6) synchron von einem gemeinsamen Antrieb (9) antreibbar sind.

7. Antrieb für einen Förderer nach Anspruch 5,
**dadurch gekennzeichnet, dass**
jede Schnecke (6) mit einen eigenen Antrieb (9) versehen ist.

8. Antrieb für einen Förderer nach einem der Ansprüche 5 bis 7,
**dadurch gekennzeichnet, dass**
mindestes eine der Schnecken (6) von ihrem Antrieb (9) entkoppelbar ist

9. Antrieb für einen Förderer nach Anspruch 8,
**dadurch gekennzeichnet, dass**
mindestens eine Schnecke (6) mit einem Freilauf versehen ist.

10. Antrieb für einen Förderer nach Anspruch 1 bis 9,
**dadurch gekennzeichnet, dass**
der Antrieb (9) der Schnecke (6) ein Getriebemotor (9) mit zugeordnetem Frequenzumrichter (10) ist.
